# EUROPEAN PATENT SPECIFICATION

(11) **EP 3 653 876 B1**
(45) Date of publication and mention of the grant of the patent: **14.12.2022**
(21) Application number: 19175006.6
(22) Date of filing: 16.05.2019
(51) Int. Cl.: F04B 35/04, H02K 33/16, H02K 7/14

(54) **LINEAR MOTOR, COOLING EQUIPMENT COMPRESSOR AND COOLING EQUIPMENT**
LINEARMOTOR, KÜHLAUSRÜSTUNGSVERDICHTER UND KÜHLAUSRÜSTUNG
MOTEUR LINÉAIRE, COMPRESSEUR D'ÉQUIPEMENT DE REFROIDISSEMENT ET ÉQUIPEMENT DE REFROIDISSEMENT

(30) Priority: 14.11.2018 BR 102018073558
(43) Date of publication of application: 20.05.2020
(73) Proprietor: NIDEC GLOBAL APPLIANCE BRASIL LTDA., 89219-100 Joinville - SC (BR)
(72) Inventor: LILIE, Dietmar E. B., 89219-100 Joinville- SC (BR)
(74) Representative: Modiano, Gabriella Diana

(56) References cited:
- WO-A1-03/085810
- DE-A1- 3 804 768
- DE-A1- 4 341 127
- US-A- 5 719 451
- US-A- 6 153 951
- US-A1- 2006 250 031
- US-A1- 2012 207 628
- US-A1- 2013 058 815
- US-A1- 2018 198 337

## Description

The present invention refers to a linear motor. More specifically, the present invention refers to a topology applied to a linear motor and that provides an increase in the magnetic flow variation generated by the linear motor.

### Description of the state of the art

Linear motors are commonly used in cooling systems for driving compressors (linear), either in the ambit of refrigerators (refrigerators/freezers) or in the cooling of environments (acclimatization).

More specifically, a linear compressor normally consists of a piston that moves inside a cylinder. Suction and gas discharge valves, which regulate the intake of low pressure gas and the output of high pressure gas from inside the cylinder, are positioned on the head of this cylinder. In valid modalities, the suction valve may be disposed directly on the piston of the linear motor. The axial movement of the piston inside the cylinder of the linear compressor compresses the gas taken in through the suction valve, increasing the pressure thereof, and letting it out through the discharge valve to a high pressure zone.

Said piston is coupled to at least one magnetic body (magnet), such that the displacement of the piston causes a corresponding displacement of the magnet, and vice-versa. In a linear motor, the displacement of the magnetic body occurs in a region referred to as air gap.

Therefore, the movement of the magnet in a certain region (air gap) cause the movement of the piston and consequently a suction and compression of the cooling gas, thus initiating a cooling cycle.

Basically, there is a constant search by an optimal point in the design/manufacture of linear motors, considering three main factors:
(i) performance parameters, (ii) cost of the motor and (iii) its sizing.

Obviously the linear motor must be designed to have adequate efficiency, low energy consumption, be absent of noise or trepidation, also having reduced sizing and manufacturing costs.

There are various models of linear motors currently known in the state of the art, wherein differences between such models may be related to the disposition and arrangement of the stator and rotor, such as stator simples, double stator, short stator and short rotor, quantity of existing magnetic bodies, among others. The teachings of the present invention can be applied to any one of these models.

One of the known topologies of a linear motor refers to the topology wherein the stator is U-shaped, in this case, what is basically used is a single magnet that moves through the air gap portion (basically the magnet moves between the two legs of said "U").

Document US 5 719 451 discloses a linear magnetic actuator that has a pair of stator windings of opposite polarity formed inside a cylindrical soft iron shell providing a slotless back iron piece. The axially movable shuffle comprises a soft iron shaft with a pair of radially magnetized annular permanent magnets. The arrangement has cylindrical symmetry and the stator windings are as thin as possible to minimize the air gap between the cylindrical pole faces of the annular magnets and the back iron.

One of the problems found in this topology refers to the low magnetic flow variation generated by the movement of the magnet, thus requiring an increase in size of the motor so that it can achieve a certain power.

One of the ways of increasing the magnetic flow variation generated in the motor consists of using two magnetic bodies in its air gap, and as such commonly uses an E-shaped stator. However, and considering that the main costs of a motor arise from its magnet, said arrangement becomes unfeasible in financial terms (manufacturing costs), even if they enable a compacted motor to be achieved.

Therefore, there is a constant search in the state of the art for ways of increasing the magnetic flow variation of a linear motor having flat topology, also satisfying the motor efficiency parameters and maintaining its sizing and reduced costs.

As already mentioned, it is not enough for the proposed linear motor to comprise a greater quantity of magnets, which ultimately increases its manufacturing (and sales) costs.

Therefore, the present invention proposes a linear motor having flat topology, wherein the air gap area comprises just one magnetic body, but which provides flow variations similar to those obtained when using more than one magnet.

Accordingly, the topology proposed herein makes use of a high magnetic permeability element disposed in the air gap area and adjacently to the magnetic body, wherein said magnetically permeable element moves in accordance with the movement of the magnetic body, that is, both have cooperative movement, as better described ahead.

### Objectives of the invention

The objective of the present invention is to provide a linear motor having flat topology.

An additional objective of the present invention is the proposal of a linear motor endowed with a magnetically permeable element disposed in the air gap area, and adjacently to a magnetic body.

An additional objective of the present invention consists of the fact that the magnetically permeable element has movement cooperative to the movement of the magnetic body.

A further objective of the present invention is the arrangement of the magnetically permeable element into two segments, wherein each segment is disposed at opposite ends of the magnetic body of the linear motor.

An additional objective of the present invention consists of the formation of a linear motor wherein the two segments of the magnetically permeable element are formed by ferromagnetic materials.

Another objective of the present invention is the proposal that at least one of the first and the second segments is made of iron.

Also proposed is a linear compressor endowed with the linear motor proposed in the present invention, in addition to cooling equipment that makes use of said linear compressor.

Another objective of the present invention is the proposal of a stator applicable in a linear motor.

### Brief description of the invention

The objectives of the present invention are achieved by way of a linear motor having the features set forth in claim 1

### Summarized description of the drawings

The present invention will now be described in greater detail based on an example of an embodiment represented in the drawings. The drawings show:
- Figure 1 - illustrates a linear compressor capable of receiving a linear motor as proposed in the present invention;
- Figure 2 - illustrates a topology of a linear motor known in the state of the art, also highlighting a movement parameter of the magnetic body through the air gap area, wherein figure 2(a) illustrates the magnetic body at its maximum displacement adjacent to one of the boundary limits of the stator, figure 2 (b) illustrates the magnetic body at its intermediary displacement and figure 2(c) illustrates the magnetic body at its maximum displacement, opposite the displacement represented in figure 2(a) .
- Figure 3 - illustrates an additional topology of a linear motor known in the state of the art and which will be able to absorb the teachings of the present invention;
- Figure 4 - represents an additional topology of a linear motor known in the state of the art and able to absorb the teachings of the present invention, further representing the displacement of the magnets in the air gap area and also the boundary limits of the stator, wherein figure 4(a) represents the maximum displacement of the magnets as far as one of the boundary limits, figure 4(b) represents an intermediary displacement of the magnets and figure 4(c) represents the maximum displacement of the magnets as far as the boundary limit opposite that represented in figure 4(a) ;
- Figure 5 - illustrates a topology of a linear motor comprising the teachings proposed in the present invention, wherein the linear motor comprises a magnetically permeable movement element cooperative to the movement of the magnetic body, wherein figures 5(a) and 5(b) illustrate the linear motor where the displacement of the magnet reached its outermost limits, and figure 5(c) illustrates the linear motor wherein the displacement of the magnet is at an intermediary point of the representation of figures 5(a) and 5(c) ;
- Figure 6 - illustrates a topology of a linear motor comprising the teachings proposed in the present invention, wherein each segment of the magnetically permeable element comprises a certain sizing, such that figures 6(a) and 6(b) illustrate points of maximum displacement of the magnetic body;
- Figure 7 - illustrates an additional topology of a linear motor that comprises the teachings proposed in the present invention, wherein the linear motor comprises a magnetically permeable movement element cooperative to the movement of the magnetic body, wherein figures 7(a) and 7(b) illustrate the linear motor wherein the displacement of the magnet reached its outermost limits;
- Figure 8 - represents a graph of the magnetic flow variation rate based on the displacement of the magnet for a motor known in the state of the art and for a motor that comprises the teachings proposed in the present invention;
- Figure 9 - is a representation of a displacer of a linear motor that comprises the teachings of the present invention, indicating the formation of the magnetically permeable element based on a plurality of steel blades as well as the form of disposition of the magnetically permeable element and of the magnetic body on the displacer.
- Figure 10 - is an additional representation of a linear motor that comprises the teachings proposed in the present invention, also highlighting a first distance between the magnetically permeable element and the magnetic body and also a thickness of the magnetic body;
- Figure 11 - illustrates an additional representation of the linear motor of figure 10 , highlighting the disposition of a portion of the second segment of the magnetically permeable element outwardly of the air gap area;
- Figure 12 - illustrates an additional representation of the linear motor shown in figure 10 , indicating a movement parameter opposite that indicated in said figure;
- Figure 13 - illustrates an additional representation of the linear motor shown in figure 12 , highlighting the disposition of a portion of the first segment of the magnetically permeable element outwardly of the air gap area.

### Detailed description of the drawings

The present invention refers to a linear motor 1, and more specifically to a linear motor 1 capable of being used in a linear compressor 30 of a cooling system.

Cooling system is understood to be any system wherein a certain cooling gas is used to cool/acclimatize a certain environment or product. In this arrangement of the present invention, cooling system can be understood to be cooling equipment (such as a freezer or refrigerator) or air-conditioning equipment.

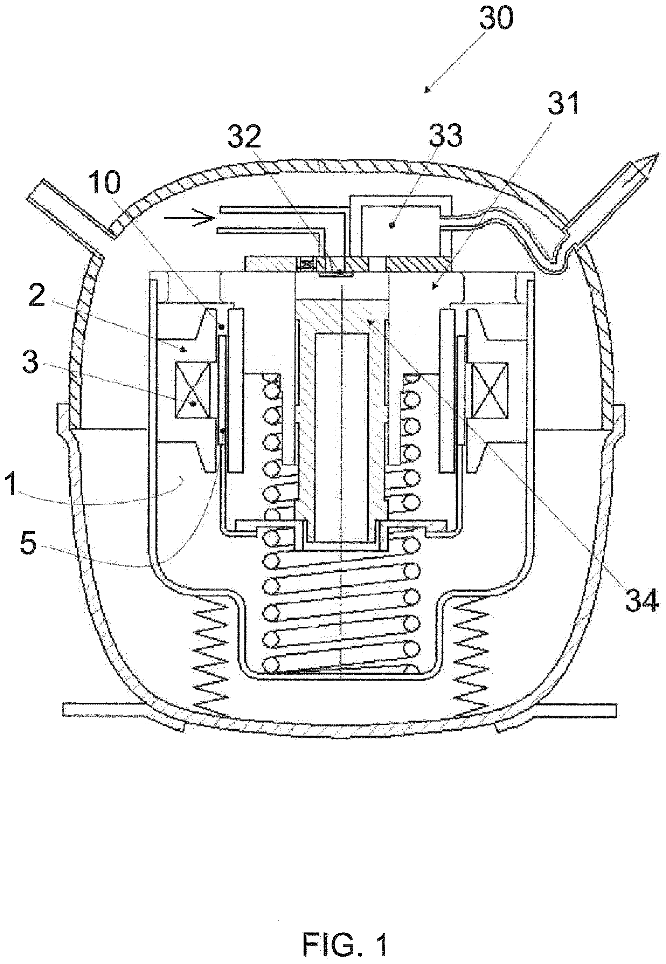

Figure 1 illustrates a linear compressor 30 capable of receiving a linear motor 1 such as proposed in the present invention. The present description will concentrate on the relevant characteristics of the linear compressor 30 for a perfect understanding of the linear motor 1 proposed in the present invention.

Therefore, and as known by those persons skilled in the art, the linear compressor 30 comprises a cylinder 31, which presents a board of valves at its uppermost end, also called valve head. This board of valves comprises a suction valve 32 that lets gas at low pressure into the cylinder 31, and a discharge gas valve 33 that lets gas at high pressure out of the cylinder 31.

The linear compressor 30 further comprises a piston 34 that moves inside the cylinder 31, constituting therewith a resonant set. Inside the cylinder 31, the piston 34 carries out an alternative linear movement, performing action of compression on the gas taken inside the cylinder 31 by the suction valve 32, up to the point at which this gas can be discharged to the high pressure side by way of the discharge valve 33.

It is also noted in figure 1 that the piston 34 is coupled to at least one magnetic body 5 (magnet) of a linear motor, such that the displacement of the piston 34 causes a corresponding displacement of the magnet 5, and vice-versa. The magnet 5 is preferably disposed around the outer surface of the piston 34, as can be seen in figure 1 . In alternative forms, the magnet 5 may be connected to the piston in different ways, for example being fixed to a rod that is connected to the piston. The form of fastening the magnet 5 to the piston 34 does not refer to the essential characteristic of the present invention.

The linear compressor 30, and more specifically its linear motor 1, further comprises a stator 2 associated to a coil 3, and said coil 3 should be electrically powered so as to produce a magnetic field responsible for operating the linear motor 1. Also noted is an air gap area 10 disposed next to the stator 2 in which said magnetic body 5 should move so as to enable the due operation of the linear motor.

It is worth emphasizing that figure 1 does not effectively illustrate the teachings proposed in the present invention, and this figure is being used solely for an improved understanding of a compressor 30 and of the main elements that form it. As better addressed ahead, the present invention focuses its teachings in the air gap area 10 and on the magnetic body 5 of the linear compressor 30.

With regards to the magnet 5 of the linear compressor 30, and as already addressed previously, it should move through the air gap area 10 so as to provide the movement of the piston 34 of the compressor 30. Therefore, it is understood that the magnet 5 (magnetic body) establishes a movement parameter in the air gap area 10. In other words, the movement parameter of the magnet 5 should be understood as the movement (displacement) of the magnet 5 in the air gap 10.

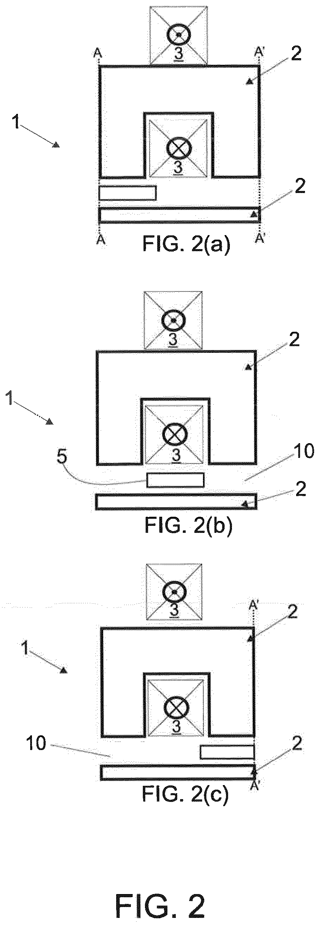

In this sense, figure 2 represents a topology of a linear motor known in the state of the art, wherein the stator 2, coil 3, magnet 5 and air gap 10 are illustrated.

More specifically, figure 2 represents the movement parameter of the magnetic body 5 through the gap 10 in a linear motor with U-shaped topology, wherein it is noted that the magnetic body 5 excursions between the boundary limits A and A' of the stator 2 (the boundary limits A and A' are explicitly illustrated in figure 2(a) ).

Accordingly, figure 2(a) illustrates the magnetic body 5 at its maximum displacement, adjacent to the boundary limit A, figure 2(b) illustrates the magnetic body 5 at its intermediary displacement and figure 2(c) illustrates the magnet 5 at its maximum displacement adjacent to the boundary limit A'.

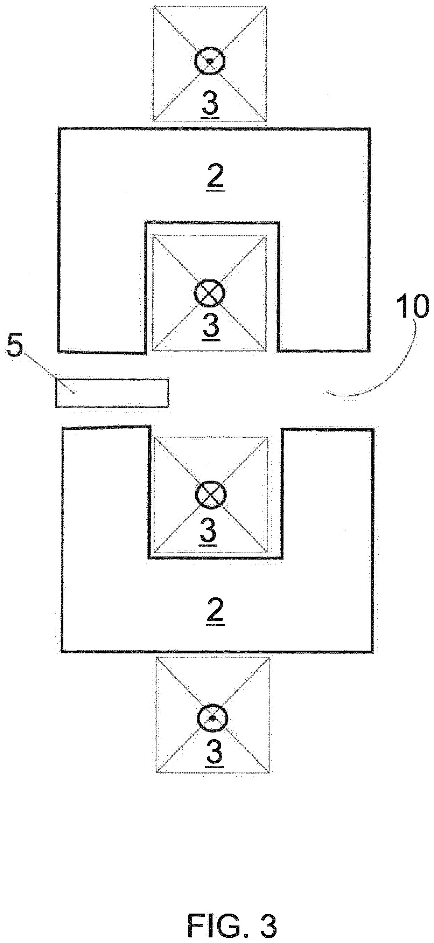

Figure 3 illustrates an additional topology of a linear motor 1 with U-shaped stator 2, representing an additional form of association of the coils 3 to the stator 2. The air gap area 10 as well as the magnet 5 is seen in this figure.

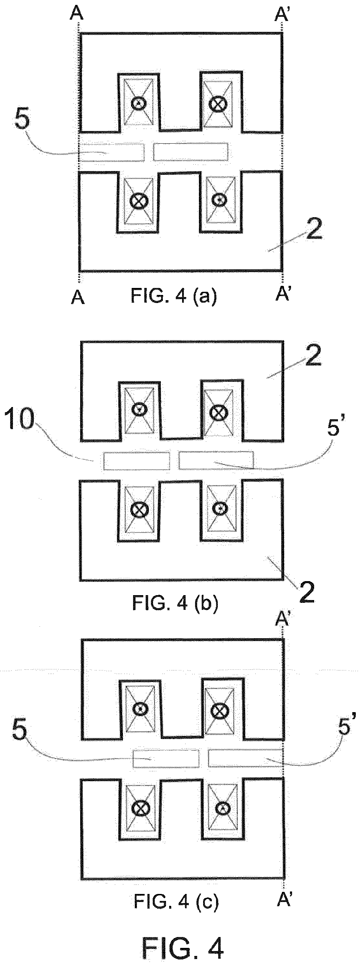

Figure 4 illustrates a topology of a linear motor known in the state of the art as E-shaped topology, said terminology originating from the shape of the stator 2. It is noted in this arrangement that two magnetic bodies 5 and 5' move along the air gap 10. Precisely by having two magnets 5,5' disposed in the air gap 10, this topology ultimately provides a greater magnetic flow variation rate. On the other hand, the manufacturing costs of the motor also increase.

Figure 4(a) shows the representation of the boundary limits A, A' of the stator 2. It is thus understood that figure 4(a) represents the maximum displacement of the magnet 5 as far as the boundary limit A, figure 4(b) representing an intermediary displacement of the magnets 5 and 5' and figure 4(c) representing the maximum displacement of the magnets 5 and 5', wherein the magnet 5' moves as far as the boundary limit A'.

Therefore, figures 1 to 4 are non-exhaustive representations of compressors and linear motors that can absorb the teachings of the present invention.

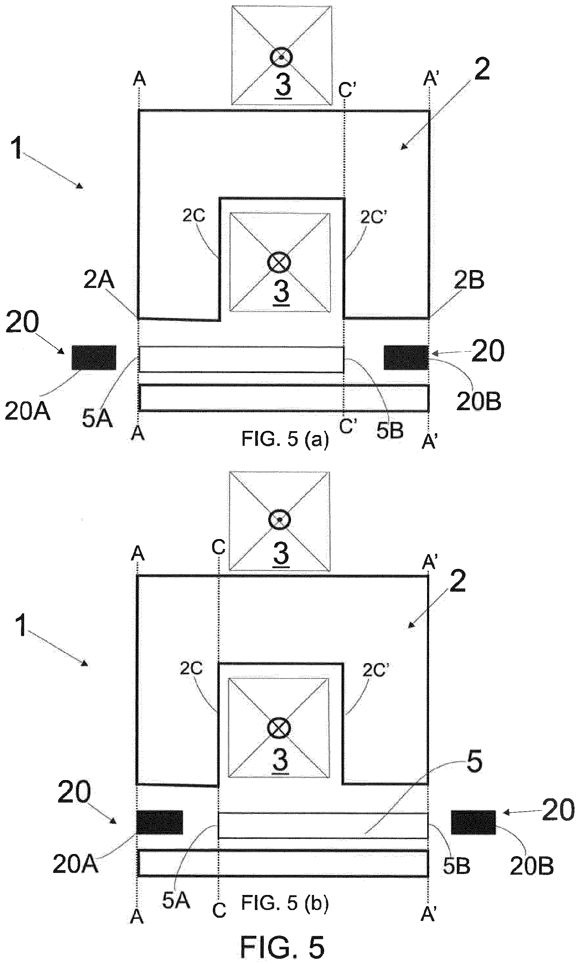

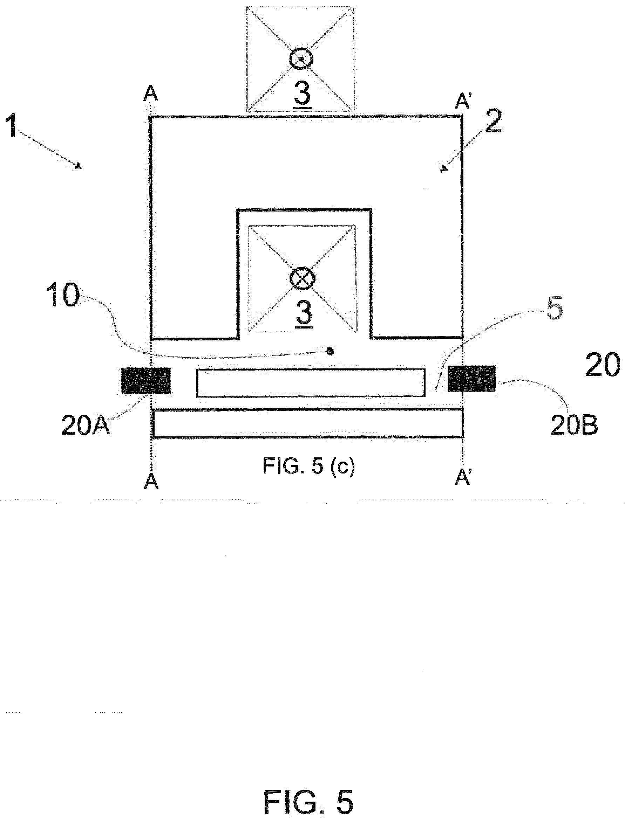

In this sense, figure 5 illustrates a representation of a stator 2 of a linear motor 1 comprising the teachings proposed in the present invention.

The elements previously described when addressing figures 1 to 4 are again presented in the subsequent figures, wherein the same reference number is used. So there is a stator 2, a magnetic body 5 that moves in the air gap 10 as well as a coil 3 associated to the stator 2.

It is noted that figure 5 illustrates a possible topology for a linear motor with a U-shaped stator 2, wherein a single magnet 5 moves in the air gap area 10, that is, between the two "legs" of the "U".

The teachings of the present invention provide an increase in the magnetic flow variation when compared to the teachings of the state of the art. Accordingly, the disposition of at least one ferromagnetic element 20 in the air gap area 10 is proposed, as shown in figure 5.

Accordingly, it is noted that this arrangement of the present invention proposes the use of two ferromagnetic elements 20, each of them disposed on one of the sides of the magnet 5, as represented in figure 5 . It is thus understood that the ferromagnetic element 20 is formed by a first segment 20A and by a second segment 20B, each of the segments disposed on the side (adjacently) of one of the sides of the magnet 5. Accordingly, it can be seen in figure 5 that the first segment 20A and the second segment 20B are disposed at opposite ends of the magnetic body 5.

In a preferred and valid arrangement of the present invention, both the first segment 20A and the second segment 20B are made of one and the same material, being iron.

In other fully valid modalities, the first segment 20A can be made in a first magnetically permeable material and the second segment 20B in a second magnetically permeable material.

Obviously, it is understood that the first and second magnetically permeable materials should be ones that facilitate the passage of the lines of magnetic flow on the surface of this material.

In this sense, persons skilled in the art are aware of the fact that the materials can be classified according to their magnetic permeability, that is: diamagnetic materials (have lesser permeability than that of vacuum), paramagnetic materials (have slightly greater permeability than that of vacuum) and ferromagnetic materials (have permeability of hundreds and even thousands of times greater than that of vacuum).

More specifically, it should be understood the first magnetically permeable material and the second magnetically permeable material as ferromagnetic materials, such as: iron, nickel, steel, cobalt and their respective alloys.

Therefore, a valid and non-limitative arrangement of the present invention consists of the formation of the first segment 20A made of iron and of the second segment 20B made of nickel.

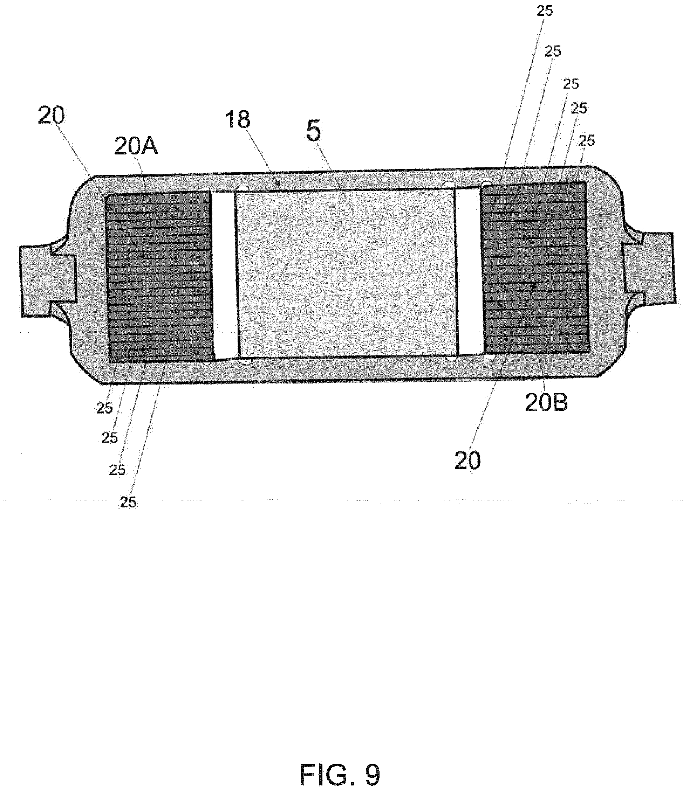

A preferred form of fastening the ferromagnetic element 20 in the linear motor 1 is represented in figure 9 . It is noted that the ferromagnetic element 20 is fastened on the displacer 18 of the linear motor, adjacently to the magnetic body 5.

Therefore, the displacer 18 acts as a support (mold) for the set formed by the ferromagnetic element 20 and the magnetic body 5. Accordingly, it is understood that during the operation of the linear motor 1, the displacer 18 moves jointly with the ferromagnetic element 20 and the magnetic body 5.

In one modality, the displacer 18 can be made of aluminum. In any case, this should not be considered as a limitative characteristic of the present invention.

As known by persons skilled in the art, the displacer 18 of a linear motor 1 should be understood as the active part of the motor, equivalent to the rotor (mobile part) of a conventional motor.

Additionally, a fully valid arrangement of the present invention proposes that the ferromagnetic element 20 is formed by a plurality of steel blades 25, like the steel blades 25 used in manufacturing electric motors. Further, it is proposed that the steel blades 25 are sequentially arranged along the element 20, such as represented in figure 9 .

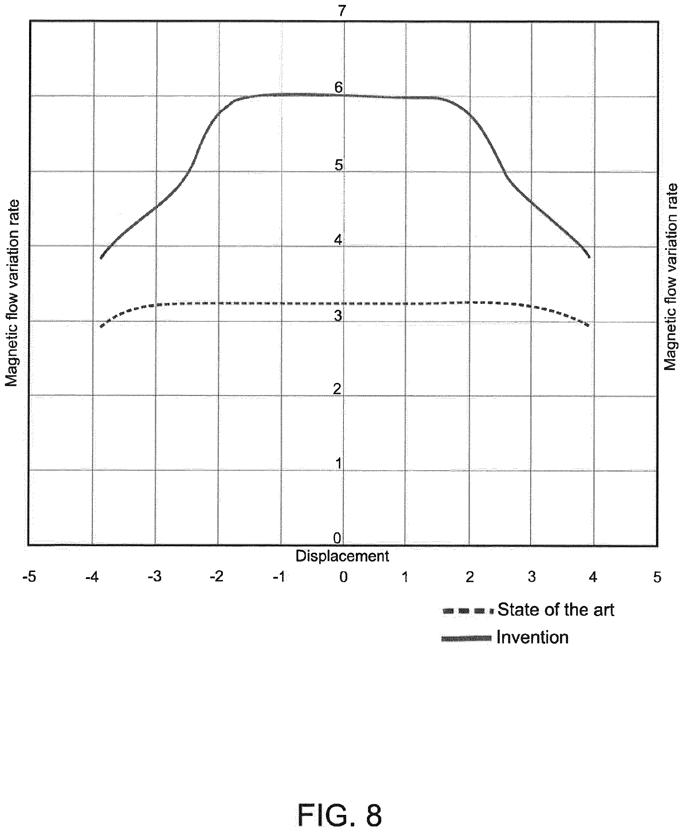

Therefore, the disposition of the ferromagnetic element 20 as proposed herein decreases the resistance of the magnetic flow lines which move through the air gap 10, in other words, the ferromagnetic element 20 will make the flow lines be attracted, whereby boosting the magnetic flow variation, as illustrated in the graph of figure 8 , wherein the magnetic flow variation rate based on the displacement of the magnet 5 is illustrated. Amounts obtained by simulation are thus highlighted for motors that do not make use of the ferromagnetic element 20 and for motors according to the teachings of the present invention.

Based on the teachings of the present invention, that is, with the disposition of the ferromagnetic element 20, there is obtained a magnetic flow variation rate similar to the one obtained with the linear motor that comprises a pair of magnets in its air gap 10 (such as the motor illustrated in figure 4 ). However, it is emphasized that the arrangement shown in figure 5 makes use of just one single magnetic body 5.

It is thus understood that the teachings of the present invention are preferably beneficial for the linear motor that comprises U-shaped topology, and which thus makes use of just one magnetic body in its air gap.

According to the teachings of the present invention and as illustrated in figure 5 , a movement of the magnet 5 will also cause the movement of the ferromagnetic element 20 (and consequently of the segments 20A and 20B), it is thus understood that the movement parameter of the magnetic body 5 is cooperative to the movement parameter of the ferromagnetic element 20.

In other words, and taking the representation of figure 5 as reference, as the magnet 5 moves to the left, the ferromagnetic element 20 (and segments 20A and 20B) will also move to the left. Similarly, as the magnet 5 moves to the right, the ferromagnetic element 20 will also move to the right.

Therefore, and considering the illustration in figure 5 (a) wherein the boundary limit A and A' of the stator 2 is defined respectively by the end surfaces 2A and 2B thereof, then at an outermost point of the movement parameter of the magnetic body 5 the first segment 20A of the ferromagnetic element 20 moves beyond the boundary limit A.

In this situation, the adjacent segment, that is, the second segment 20B of the ferromagnetic element 20 is mostly disposed in the air gap area 10, that is, the second segment 20B is mostly disposed in the region defined by the boundary limits A and A'.

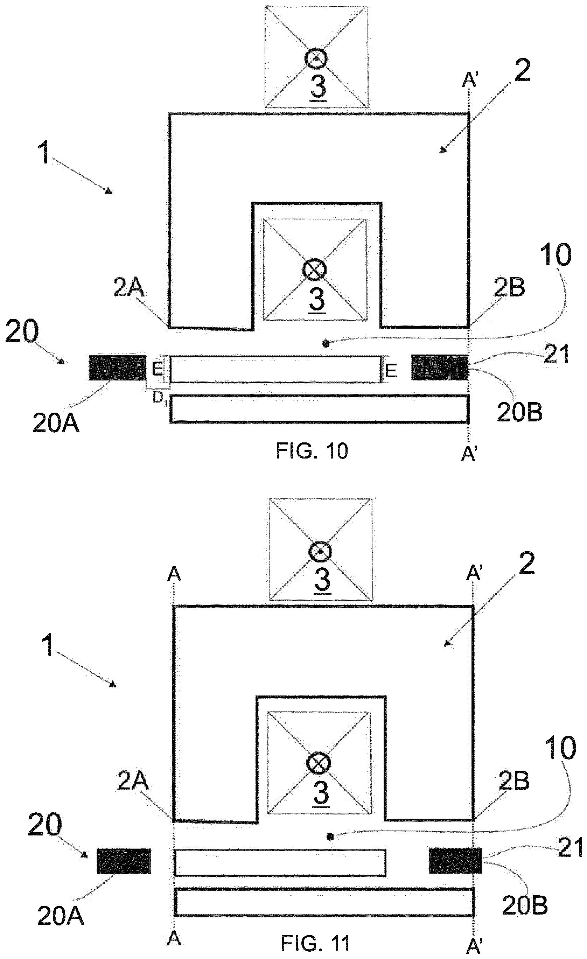

By mostly disposed, it is understood that the second segment 20B will have its outer wall 21 disposed exactly on the boundary limit A', such as represented in figure 10 , or even a minority portion (less than 50% of its length) of the second segment 20B will be disposed beyond the boundary limit A', that is, disposed outside the area defined by the boundary limit A', as represented in figure 11 .

The outermost point of the movement parameter of the magnetic body 5 is understood to mean the maximum displacement of the magnet 5 before its change of direction, such as the situation represented in figures 5(a) and 5(b) .

In line with that previously described for figure 5(a), figure 5(b) illustrates the movement parameter of the magnet 5 wherein at the outermost point of said displacement the second segment 20B moves to a point beyond the boundary limit A' while the first segment 20A is mostly disposed in the air gap area 10.

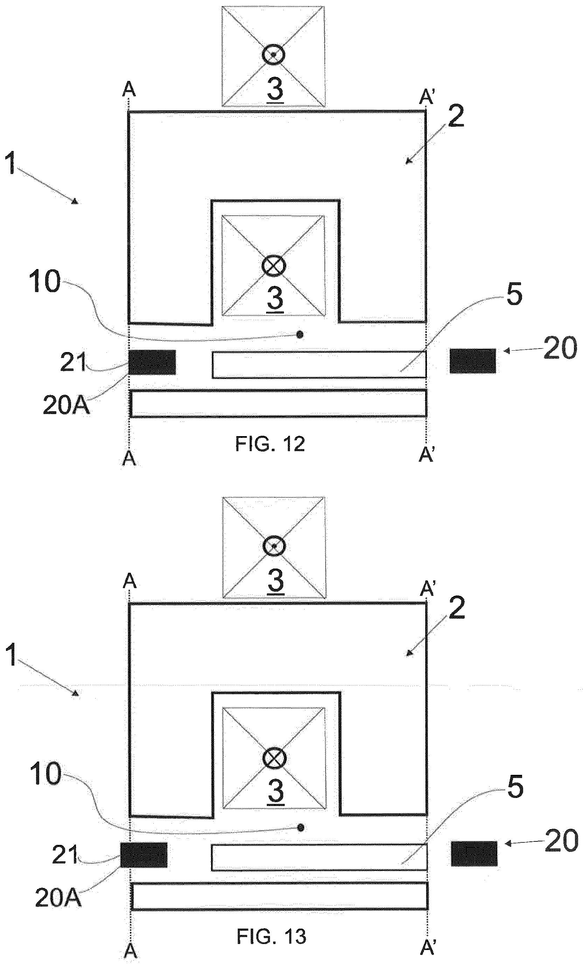

By mostly disposed, it is understood that the first segment 20A will have its outer wall 21 disposed exactly on the boundary limit A, such as represented in figure 12 , or even that a minority portion (less than 50% of its length) of the first segment 20A will be disposed beyond the boundary limit A, that is, disposed outside the area defined by the boundary limit A, as represented in figure 13 .

Further in relation to the sizing of the magnetic body 5, it is proposed that at the outermost point of the movement parameter of the magnet 5, a first surface 5A of the magnetic body will be disposed on the boundary limit A, whereas a second surface 5B is disposed on an air gap shaft C', as shown in figure 5 (a) .

In accordance with the description set out in the preceding paragraph, at the point opposite that represented in figure 5 (a) , the second surface 5B of the magnetic body is disposed on the boundary limit A', whereas the first surface 5A (opposite the second surface 5B) is disposed on the air gap shaft C of the linear motor 1, as represented in figure 5 (b) .

It is thus understood that each one of the air gap shafts C and C' of the linear motor 1 is respectively defined by inner surfaces 2C and 2C' of the stator 2, as represented in figures 5 (a) and 5 (b) .

In addition to the representation of figures 5(a) and 5(b) , figure 5(c) illustrates the scenario wherein the displacement of the magnet 5 is found at an intermediary point to the scenario represented in figures 5(a) and 5(b) .

Further in relation to the sizing of the ferromagnetic element 20 and of the magnetic body 5, and with specific reference to figure 10 , a first distance D1 of the ferromagnetic element 20 as far as the magnet 5 is preferably of the order of a thickness E of the magnet or less.

In other words, it is understood that the first distance D1 is equal to or less than thickness E of the magnet 5, according to representation 11. Therefore, it is understood that D1 ≤ E.

As represented in figure 5 , this arrangement of the present invention proposes that the first and second segments 20A and 20B have equal dimensions, that is, said segments are dimensionally identical. In any way, the arrangement of a linear motor is fully valid, wherein segments 20A or 20B have different sizes to each other.

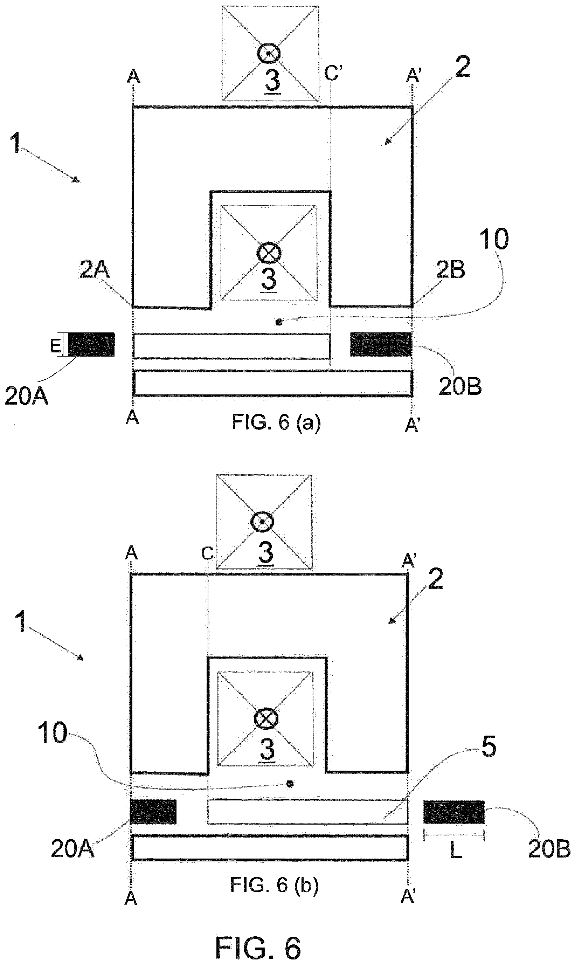

Therefore, figure 6 illustrates a modality wherein the second segment 20B has a length L greater than the length of the first segment 20A. Obviously it is understood that the reverse scenario is also fully acceptable. With this proposal, the manufacturer of the linear motor 1 has the possibility of sizing each one of the segments 20A and 20B according to the material used in the manufacture thereof. Further in relation to figure 6 , it is noted that the figures 6(a) and 6(b) illustrate maximum displacement points of the magnet 5. The difference commented upon in relation to length L of segments 20A and 20B should not represent a limitation of the present invention, such that thickness E of the ferromagnetic element 20 could also be dimensionally different to each other.

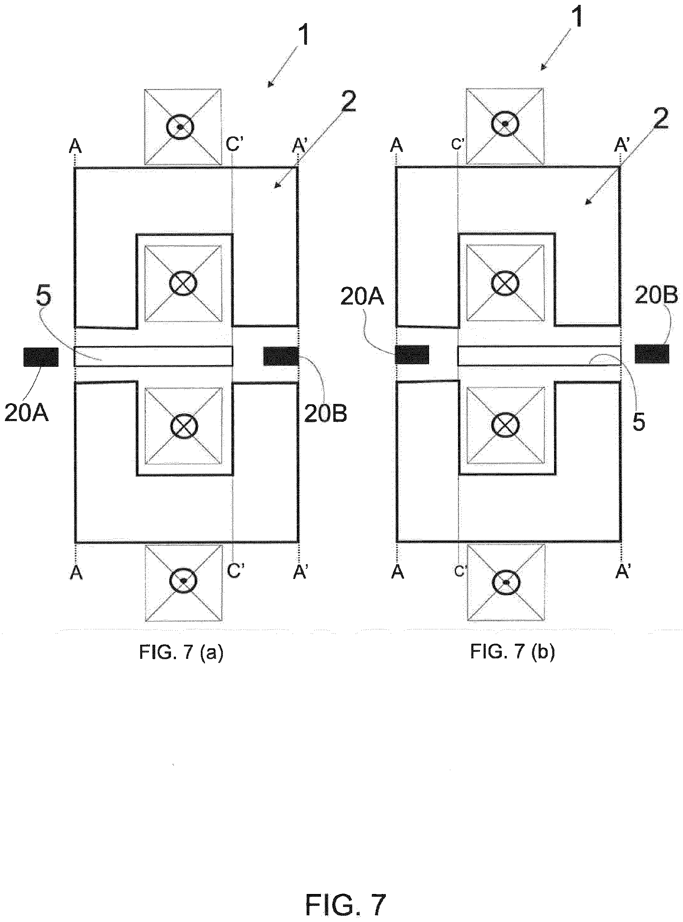

Obviously, applying the present invention is not limited to the stator 2 represented in figures 5 , 6 , 7 and 10 to 13 , such that it is understood that the use of the ferromagnetic element 20 is possible in any topology known for a linear motor, and not only for those discussed and illustrated in the present invention.

Whatever the topology of the linear motor, it is understood to be fully possible to apply the modality wherein the segments 20A and 20B have equal or different sizing, as already addressed herein.

There is thus described a linear motor 1 endowed with a ferromagnetic element 20, wherein the movement parameter of the ferromagnetic element 20 is cooperative to the movement parameter of the magnetic body 5 (magnet) of the linear motor 1.

The teachings of the present invention provide an increase in the magnetic flow variation that circulates through the stator 2 and air gap 10, providing, for example, that a linear motor endowed with a single magnetic body has a similar flow variation rate to a motor that comprises a pair of magnets.

In harmony with that previously described, the present invention further addresses a compressor endowed with a linear motor 1 according to the teachings of the present invention. In one modality, said compressor is used in cooling equipment, such as a freezer/refrigerator or air-conditioning equipment.

Therefore, the present invention further proposes cooling equipment that comprises the linear motor defined herein.

Lastly, the arrangement of the present invention wherein the ferromagnetic element 20 is made of Sheet Molding Compound (SMC) is fully valid.

## Claims

1. A linear motor (1) comprising: a stator (2) defining at least an air gap area (10),
at least one coil (3) associated to the stator (2), wherein a magnetic flow (4) moves over at least one portion of the stator (2) and over a portion of the air gap area (10),
a magnetic body (5) disposed in the air gap area (10),
at least one ferromagnetic element (20) disposed in the air gap area (10) and adjacently to the magnetic body (5), wherein the movement parameter of the magnetic body (5) is cooperative to the movement parameter of the ferromagnetic element (20);
wherein the linear motor (1) is further **characterized by** comprising a displacer (18) that acts as a support for the set formed by the ferromagnetic element (20) and the magnetic body (5), wherein the displacer (18) is adapted to move jointly with the ferromagnetic element (20) and the magnetic body (5).

2. The linear motor (1) according to claim 1, **characterized in that** the ferromagnetic element (20) is formed by a first segment (20A) and by a second segment (20B).

3. The linear motor (1) according to claim 2, **characterized in that** the first segment (20A) and the second segment (20B) are disposed at opposite ends of the magnetic body (5).

4. The linear motor (1) according to claim 3, **characterized in that** the first segment (20A) is formed by a first ferromagnetic material and the second segment (20B) is formed by a second ferromagnetic material.

5. The linear motor (1) according to claim 4, **characterized in that** the first ferromagnetic and the second ferromagnetic material are ferromagnetic materials.

6. The linear motor (1) according to claim 5, **characterized in that** at least one of the first ferromagnetic material and the second ferromagnetic material is iron.

7. The linear motor (1) according to claim 5, **characterized in that** at least one of the first segment (20A) and the second segment (20B) is formed by a plurality of steel blades (25) sequentially arranged along the ferromagnetic element (20).

8. The linear motor (1) according to claim 6 or 7, **characterized in that** a first distance (D₁) of the ferromagnetic element (20) to the magnetic body (5) is equal to or less than a thickness (E) of the magnetic body (5).

9. The linear motor (1) according to claim 7, **characterized in that** a boundary limit (A,A') of the stator (2) is defined by end surfaces (2A,2B) of the stator (2), wherein at an outermost point of the movement parameter of the magnetic body (5), one of the first segment (20A) and the second segment (20B) moves to a point beyond the boundary limit (A,A').

10. The linear motor (1) according to claim 9, **characterized in that** while one of the first segment (20A) and the second segment (20B) moves to a point beyond the boundary limit (A), the adjacent segment is mostly disposed in the air gap area (10).

11. The linear motor (1) according to claim 9, **characterized in that** at an outermost point of the movement parameter of the magnetic body (5), one of a first surface (5A) and a second surface (5B) of the magnetic body (5) is disposed on one of the boundary limits (A,A') while the opposite surface (5A, 5B) is disposed on an air gap shaft (C,C') of the linear motor (1).

12. The linear motor (1) according to claim 11, **characterized in that** the air gap shaft (C,C') is defined by inner surfaces (2C,2C') of the stator (2).

13. The linear motor (1) according to claim 12, **characterized in that** the first segment (20A) and the second segment (20B) are dimensionally identical.

14. The linear motor (1) according to claim 12, **characterized in that** the first segment (20A) and the second segment (20B) are dimensionally different to each other.

15. The linear motor (1) according to claim 13 or 14, **characterized in that** each air gap area (10) comprises just one single magnetic body (5).

16. Cooling equipment **characterized by** comprising a linear motor (1) as defined in claims 1 to 15.

## Patentansprüche

1. Ein Linearmotor (1), der Folgendes umfasst: einen Stator (2), der mindestens einen Luftspaltbereich (10) bestimmt,
mindestens eine mit dem Stator (2) verknüpfte Spule (3), wobei ein Magnetfluss (4) sich über mindestens einen Abschnitt des Stators (2) und über einen Abschnitt des Luftspaltbereichs (10) bewegt,
einen magnetischen Körper (5), der in dem Luftspaltbereich (10) angeordnet ist,
mindestens ein ferromagnetisches Element (20), angeordnet in dem Luftspaltbereich (10) und angrenzend an den magnetischen Körper (5), wobei der Bewegungsparameter des magnetischen Körpers (5) mit dem Bewegungsparameter des ferromagnetischen Elements (20) zusammenwirkt;
wobei der Linearmotor (1) weiter **dadurch gekennzeichnet ist, dass** er einen Verdrängerkolben (18) umfasst, der als Träger für die Gruppe wirkt, welche aus dem ferromagnetischen Element (20) und dem magnetischen Körper (5) besteht, wobei der Verdrängerkolben (18) ausgebildet ist, um sich gemeinsam mit dem ferromagnetischen Element (20) und dem magnetischen Körper (5) zu bewegen.

2. Der Linearmotor (1) gemäß Anspruch 1, **dadurch gekennzeichnet, dass** das ferromagnetische Element (20) aus einem ersten Segment (20A) und einem zweiten Segment (20B) besteht.

3. Der Linearmotor (1) gemäß Anspruch 2, **dadurch gekennzeichnet, dass** das erste Segment (20A) und das zweite Segment (20B) an gegenüberliegenden Enden des magnetischen Körpers (5) angeordnet sind.

4. Der Linearmotor (1) gemäß Anspruch 3, **dadurch gekennzeichnet, dass** das erste Segment (20A) aus einem ersten ferromagnetischen Material besteht und das zweite Segment (20B) aus einem zweiten ferromagnetischen Material besteht.

5. Der Linearmotor (1) gemäß Anspruch 4, **dadurch gekennzeichnet, dass** das erste ferromagnetische Material und das zweite ferromagnetische Material ferromagnetische Materialien sind.

6. Der Linearmotor (1) gemäß Anspruch 5, **dadurch gekennzeichnet, dass** das erste ferromagnetische Material und/oder das zweite ferromagnetische Material Eisen sind.

7. Der Linearmotor (1) gemäß Anspruch 5, **dadurch gekennzeichnet, dass** das erste Segment (20A) und/oder das zweite Segment (20B) aus einer Vielzahl von Stahllamellen (25) bestehen, die sequentiell entlang dem ferromagnetischen Element (20) angeordnet sind.

8. Der Linearmotor (1) gemäß Anspruch 6 oder 7, **dadurch gekennzeichnet, dass** ein erster Abstand (D₁) des ferromagnetischen Elements (20) vom magnetischen Körper (5) höchstens so groß ist wie eine Dicke (E) des magnetischen Körpers (5).

9. Der Linearmotor (1) gemäß Anspruch 7, **dadurch gekennzeichnet, dass** eine Begrenzung (A, A') des Stators (2) durch Stirnflächen (2A, 2B) des Stators (2) bestimmt ist, wobei sich an einem äußersten Punkt des Bewegungsparameters des magnetischen Körpers (5) entweder das erste Segment (20A) oder das zweite Segment (20B) an einen Punkt außerhalb der Begrenzung (A, A') bewegt.

10. Der Linearmotor (1) gemäß Anspruch 9, **dadurch gekennzeichnet, dass**, während sich entweder das erste Segment (20A) oder das zweite Segment (20B) an einen Punkt außerhalb der Begrenzung (A) bewegen, das angrenzende Segment sich hauptsächlich im Luftspaltbereich (10) befindet.

11. Der Linearmotor (1) gemäß Anspruch 9, **dadurch gekennzeichnet, dass** an einem äußersten Punkt des Bewegungsparameters des magnetischen Körpers (5) eine erste Oberfläche (5A) oder eine zweite Oberfläche (5B) des magnetischen Körpers (5) an einer der Begrenzungen (A, A') angeordnet ist, während die gegenüberliegende Oberfläche (5A, 5B) an einem Luftspaltschacht (C, C") des Linearmotors (1) angeordnet ist.

12. Der Linearmotor (1) gemäß Anspruch 11, **dadurch gekennzeichnet, dass** der Luftspaltschacht (C, C') durch Innenflächen (2C, 2C') des Stators (2) bestimmt wird.

13. Der Linearmotor (1) gemäß Anspruch 12, **dadurch gekennzeichnet, dass** das erste Segment (20A) und das zweite Segment (20B) in ihren Abmessungen identisch sind.

14. Der Linearmotor (1) gemäß Anspruch 12, **dadurch gekennzeichnet, dass** das erste Segment (20A) und das zweite Segment (20B) sich in ihren Abmessungen voneinander unterscheiden.

15. Der Linearmotor (1) gemäß Anspruch 13 oder 14, **dadurch gekennzeichnet, dass** jeder Luftspaltbereich (10) nur einen einzigen magnetischen Körper (5) umfasst.

16. Kühlausrüstung, **dadurch gekennzeichnet, dass** sie einen Linearmotor (1) wie in den Ansprüchen 1 bis 15 definiert umfasst.

## Revendications

1. Moteur linéaire (1) comprenant : un stator (2) définissant au moins une surface d'entrefer (10),
au moins une bobine (3) associée au stator (2), dans lequel un flux magnétique (4) se déplace au-dessus d'au moins une partie du stator (2) et au-dessus d'une partie de la surface d'entrefer (10),
un corps magnétique (5) disposé dans la surface d'entrefer (10),
au moins un élément ferromagnétique (20) disposé dans la surface d'entrefer (10) et adjacent au corps magnétique (5), dans lequel le paramètre de déplacement du corps magnétique (5) coopère avec le paramètre de déplacement de l'élément ferromagnétique (20) ;
dans lequel le moteur linéaire (1) est en outre **caractérisé en ce qu'**il comprend un déplaceur (18) qui agit comme un support pour l'ensemble formé par l'élément ferromagnétique (20) et le corps magnétique (5), dans lequel le déplaceur (18) est adapté pour se déplacer conjointement avec l'élément ferromagnétique (20) et le corps magnétique (5).

2. Moteur linéaire (1) selon la revendication 1, **caractérisé en ce que** l'élément ferromagnétique (20) est formé par un premier segment (20A) et par un second segment (20B).

3. Moteur linéaire (1) selon la revendication 2, **caractérisé en ce que** le premier segment (20A) et le second segment (20B) sont disposés à des extrémités opposées du corps magnétique (5).

4. Moteur linéaire (1) selon la revendication 3, **caractérisé en ce que** le premier segment (20A) est formé par un premier matériau ferromagnétique et le second segment (20B) est formé par un second matériau ferromagnétique.

5. Moteur linéaire (1) selon la revendication 4, **caractérisé en ce que** le premier matériau ferromagnétique et le second matériau ferromagnétique sont des matériaux ferromagnétiques.

6. Moteur linéaire (1) selon la revendication 5, **caractérisé en ce qu'**au moins un du premier matériau ferromagnétique et du second matériau ferromagnétique est du fer.

7. Moteur linéaire (1) selon la revendication 5, **caractérisé en ce qu'**au moins un du premier segment (20A) et du second segment (20B) est formé par une pluralité de tôles d'acier (25) agencées séquentiellement le long de l'élément ferromagnétique (20).

8. Moteur linéaire (1) selon la revendication 6 ou 7, **caractérisé en ce qu'**une première distance (D₁) de l'élément ferromagnétique (20) au corps magnétique (5) est inférieure ou égale à une épaisseur (E) du corps magnétique (5).

9. Moteur linéaire (1) selon la revendication 7, **caractérisé en ce qu'**une limite (A, A') du stator (2) est définie par des surfaces d'extrémité (2A, 2B) du stator (2), dans lequel à un point le plus extérieur du paramètre de déplacement du corps magnétique (5), l'un du premier segment (20A) et du second segment (20B) se déplace jusqu'à un point au-delà de la limite (A, A').

10. Moteur linéaire (1) selon la revendication 9, **caractérisé en ce que** quand l'un du premier segment (20A) et du second segment (20B) se déplace jusqu'à un point au-delà de la limite (A), le segment adjacent est disposé principalement dans la surface d'entrefer (10).

11. Moteur linéaire (1) selon la revendication 9, **caractérisé en ce qu'**à un point le plus extérieur du paramètre de déplacement du corps magnétique (5), l'une d'une première surface (5A) et d'une seconde surface (5B) du corps magnétique (5) est disposée sur l'une des limites (A, A') quand la surface opposée (5A, 5B) est disposée sur un axe d'entrefer (C, C') du moteur linéaire (1).

12. Moteur linéaire (1) selon la revendication 11, **caractérisé en ce que** l'axe d'entrefer (C, C') est défini par des surfaces extérieures (2C, 2C') du stator (2).

13. Moteur linéaire (1) selon la revendication 12, **caractérisé en ce que** le premier segment (20A) et le second segment (20B) sont dimensionnellement identiques.

14. Moteur linéaire (1) selon la revendication 12, **caractérisé en ce que** le premier segment (20A) et le second segment (20B) sont dimensionnellement différents.

15. Moteur linéaire (1) selon la revendication 13 ou 14, **caractérisé en ce que** chaque surface d'entrefer (10) comprend juste un seul corps magnétique (5).

16. Equipement de refroidissement **caractérisé en ce qu'**il comprend un moteur linéaire (1) selon les revendications 1 à 15.
